# EUROPÄISCHE PATENTSCHRIFT

(11) **EP 1 005 425 B1**
(45) Veröffentlichungstag und Bekanntmachung des Hinweises auf die Patenterteilung: **16.04.2003**
(21) Anmeldenummer: 97941867.0
(22) Anmeldetag: 04.09.1997
(51) Int. Cl.: B65B 1/36, A61J 3/07, G01F 11/24

(54) **VORRICHTUNG ZUM DOSIEREN UND ABGEBEN VON PULVER IN HARTGELATINEKAPSELN ODER DERGLEICHEN**
DEVICE FOR DOSING AND DISPENSING POWDER INTO HARD GELATINE CAPSULES OR THE LIKE
DISPOSITIF POUR LE DOSAGE ET LA DISTRIBUTION DE POUDRE DANS DES CAPSULES DE GELATINE DURE OU ANALOGUES

(30) Priorität: 10.12.1996 DE 19651237
(43) Veröffentlichungstag der Anmeldung: 07.06.2000
(73) Patentinhaber: ROBERT BOSCH GMBH, 70442 Stuttgart (DE)
(72) Erfinder: RUNFT, Werner, D-71364 Winnenden (DE)
(86) Internationale Anmeldenummer: DE9701943
(87) Internationale Veröffentlichungsnummer: WO98025823

(56) Entgegenhaltungen:
- FR-A- 2 502 004

## Beschreibung

Die Erfindung betrifft eine Vorrichtung zum Dosieren und Abgeben von Pulver in Hartgelatinekapseln oder dergleichen nach der Gattung des Anspruchs 1, wie sie beispielsweise aus der FR 2 502 004 A bekannt geworden ist. Derartige bekannte Vorrichtungen haben einen topfförmigen Füllgutbehälter, in dessen Boden mehrere Gruppen von Bohrungen ausgebildet sind, die jeweils mit zu Stopfstempelstationen zusammengefassten, auf- und abbeweglichen Stopfstempeln zusammenwirken. Unterhalb des Füllgutbehälters und in Deckung mit den Stopfstempeln ist ein Gegenhalter in Form eines Ringes vorgesehen, so daß in den Stillstandsphasen des schrittweise gedrehten Füllgutbehälters durch die in die Bohrungen eintauchenden Stopfstempel Pulverpreßlinge gebildet werden. Die so geformten Pulverpreßlinge werden während einer weiteren Stillstandsphase des Füllgutbehälters mittels Übergabestempel in unterhalb der Bohrungen bereitgestellte Kapselunterteile eingeschoben. Um zu verhindern, daß sich oberhalb der Pulverpreßlinge loses Pulver ansammelt, das beim Einschieben der Pulverpreßlinge in die Kapselunterteile gelangt, sind die Übergabestempel von einem Pulverabweiser umgeben. Damit bei gegebener Füllgutbehältergröße eine möglichst hohe Leistung erzielt werden kann sind die Bohrungen für die Stopf- und Übergabestempel allesamt nahe der Behälterwand des Füllgutbehälters angeordnet. Dadurch ist die größtmögliche Anzahl an Bohrungen bzw. Stopfstempeln an jeder Stopfstempelstation erreichbar.

Aufgrund des die Übergabestempel umgebenden, das Pulver verdrängenden Pulverabweisers ergibt sich infolge der Anordnung der Bohrungen nahe der Behälterwand die Problematik, daß die dem Pulverabweiser unmittelbar nachgeordneten Bohrungen der ersten Stopfstempelstation nicht ausreichend bzw. nicht gleichmäßig mit Pulver versorgt werden. Dadurch ergeben sich Dosierungenauigkeiten, die dazu führen, daß die Anzahl der Bohrungen an der dem Pulverabweiser nachfolgenden Stopfstempelstation, und somit zwangsläufig an allen Stopfstempelstationen reduziert werden muß, um die gewünschte Dosiergenauigkeit zu erzielen.

### Vorteile der Erfindung

Die erfindungsgemäße Vorrichtung zum Dosieren und Abgeben von Pulver in Hartgelatinekapseln oder dergleichen mit den kennzeichnenden Merkmalen des Anspruchs 1 hat demgegenüber den Vorteil, daß bei gegebener Füllgutbehältergröße eine große Leistung bei gleichzeitig hoher Dosiergenauigkeit erzielt werden kann.

Weitere Vorteile und vorteilhafte Weiterbildungen der erfindungsgemäßen Vorrichtung zum Dosieren und Abgeben von Pulver in Hartgelatinekapseln oder dergleichen ergeben sich aus den Unteransprüchen und der Beschreibung.

Durch ein Leitelement im Füllgutbehälter läßt sich Pulver gezielt einzelnen Bohrungen zuführen, wodurch die Leistung zusätzlich erhöht wird.

Um zusätzlich Raum für mit dem Dosierbehälter zusammenwirkende Einrichtungen zu schaffen ist es vorteilhaft, den Boden des Füllgutbehälters an seinem äußeren Bereich teilweise erhöht auszubilden.

### Zeichnung

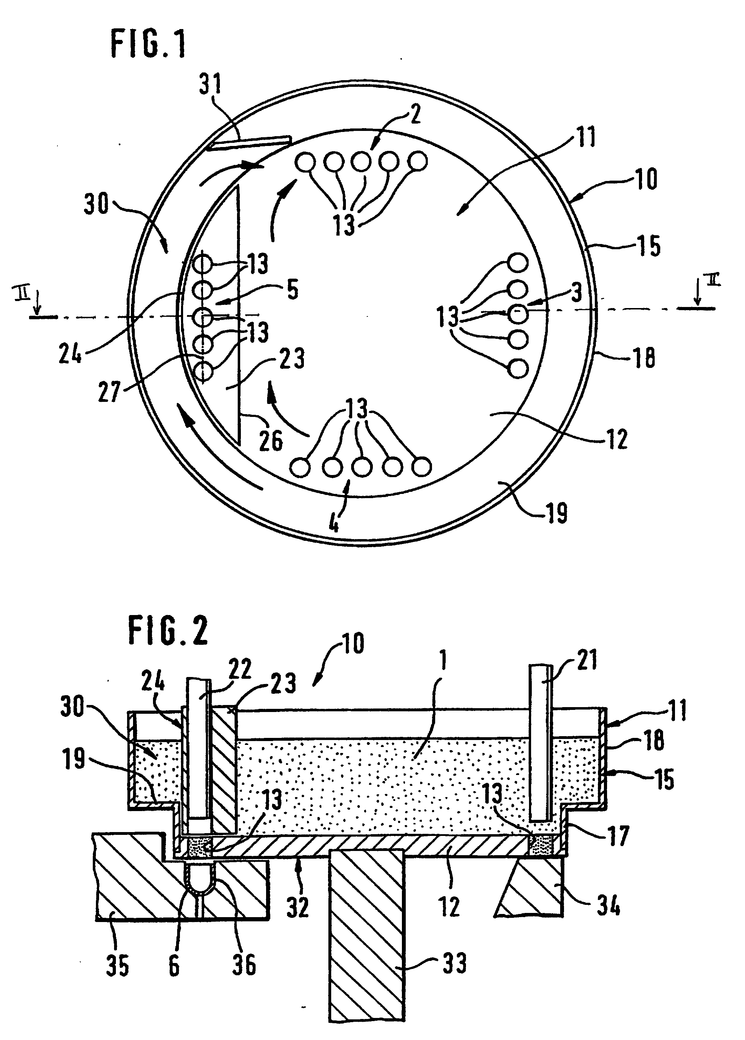

Ein Ausführungsbeispiel der Erfindung ist in der Zeichnung dargestellt, und wird in der nachfolgenden Beschreibung näher erläutert. Es zeigen Figur 1 eine Vorrichtung zum Dosieren und Abgeben von Pulver in Hartgelatinekapseln oder dergleichen in einem Längsschnitt, und Figur 2 einen Füllgutbehälter in einem Schnitt in der Ebene II-II der Figur 1.

### Beschreibung des Ausführungsbeispiels

Die in der Figur 1 dargestellte Vorrichtung 10 zum Dosieren und Abgeben von Pulver 1 in Hartgelatinekapseln oder dergleichen weist einen topfförmig ausgebildeten, schrittweise drehbaren Füllgutbehälter 11 für das Pulver 1 auf. Der Füllgutbehälter 11 hat einen scheibenförmigen Boden 12, in dem vier Gruppen 2 bis 5 mit jeweils fünf Bohrungen 13 ausgebildet sind. Die Mittelpunkte der Bohrungen 13 jeder Gruppe 2 bis 5 sind auf jeweils einem Geradenabschnitt angeordnet, und die Gruppen 2 bis 5 befinden sich um jeweils 90 Grad zueinander versetzt in einem äußeren Bereich des Bodens 12. Der Boden 12 ist von einem Mantel 15 umgeben, der innerhalb des Füllgutbehälters 11 einen Bereich 16 ausbildet, der gegenüber dem Boden 12 ringförmig erhöht ist. Dies wird dadurch erreicht, daß der Mantel 15 zwei vertikal angeordnete Wandabschnitte 17, 18 aufweist, die durch einen horizontal angeordneten Bodenabschnitt 19 miteinander verbunden sind. Infolge dessen weist der Füllgutbehälter 11 im Bereich des ersten Wandabschnitts 17 einen geringeren Durchmesser auf als im Bereich des zweiten Wandabschnitts 18.

Oberhalb und in Deckung mit den Bohrungen 13 sind drei Gruppen von Stopfstempeln 21 in drei Stopfstempelstationen und eine Gruppe von Überschiebestempeln 22 in einer Überschiebestation angeordnet. Sowohl die Stopfstempel 21, als auch die Überschiebestempel 22 sind mittels an sich bekannter, und deshalb nicht dargestellter Mittel auf- und abbeweglich ausgebildet, so daß sie während der jeweiligen Stillstandsphasen des Füllgutbehälters 11 in die Bohrungen 13 eintauchen. Die Überschiebestempel 22 sind im Bereich des Füllgutbehälters 11 von einem ortsfesten Pulverabweiskörper 23 umgeben. Der im Querschnitt kreisabschnittförmige Pulverabweiskörper 23, der bis unmittelbar an den Boden 12 des Füllgutbenälters 11 reicht, weist eine dem Verlauf des ersten Wandabschnitts 17 des Mantels 15 formschlüssig und nahezu spaltlos angepasste erste Wandung 24 auf, wohingegen eine zweite Wandung 26 des Abweiskörpers 23 parallel zu einer Geraden 27 liegt, auf der die Bohrungen 13 der Überschiebestempel 22 angeordnet sind. Zwischen der ersten Wandung 24 des Pulverabweiskörpers 23 und dem zweiten Wandabschnitt 18 des Füllgutbehälters 11 ist ein Zwischenraum 30 für das Pulver 1 ausgebildet, dessen Breite der Breite des Bodenabschnitts 19 des Füllgutbehälters 11 entspricht.

Der im Uhrzeigersinn dem Pulverabweiskörper 23 nachfolgenden ersten Gruppe 2 von Bohrungen 13 bzw. Stopfstempeln 21 ist ein ortsfestes Pulverleitblech 31 zugeordnet, das im Bereich des Bodenabschnitts 19 des Füllgutbehälters 11 angeordnet ist, und nahezu bis an diesen heranreicht. Die Anordnung des Pulverleitblechs 31 ist derart, daß es parallel und hinter den ihm zugeordneten Bohrungen 13 verläuft, und das im Zwischenraum 30 befindliche Pulver 1 bei einer Drehung des Füllgutbehälters 11 im Uhrzeigersinn zumindest teilweise in einen Bereich zwischen die Bohrungen 13 und dem ihm zugewandten Wandabschnitt 18 leitet.

Der Füllgutbehälter 11 ist an seiner Unterseite 32 mit einer Welle 33 fest verbunden, die von einem nicht dargestellten Antriebsmotor schrittweise gedreht wird. In dem Bereich, in dem auch die Bohrungen 13 in dem Boden 12 ausgebildet sind, ist die Unterseite 32 des Füllgutbehälters 11 von einem Zwischenring 34 abgedeckt, der nahezu spaltfrei mit der Unterseite 32 des Füllgutbehälters 11 abschließt. Im Bereich des Pulverabweiskörpers 23 ist unterhalb des Füllgutbehälters 11 ein Segment 35 einschwenkbar, in dem Bohrungen 36 für Kapselunterteile 6 ausgebildet sind. Die Anordnung der Bohrungen 36 im Segment 35 entspricht der Anordnung der Bohrungen 13 bzw. der Überschiebestempel 22.

Die oben beschriebene Vorrichtung 10 zum Dosieren und Abgeben von Pulver 1 in Hartgelatinekapseln oder dergleichen arbeitet wie folgt: Der mit Pulver 1 befüllte Füllgutbehälter 11 wird mittels der Welle 33 taktweise um jeweils eine Teilung, im Ausführungsbeispiel also um jeweils 90 Grad, im Uhrzeigersinn gedreht. Dabei wird das Pulver 1 unter die jeweilige Gruppe von Stopfstempeln 21 gebracht, welche in der nachfolgenden Stillstandsphase des Füllgutbehälters 11 in die Bohrungen 13 eintauchen, und dabei in den Bohrungen 13 Pulverpreßlinge bilden.

Dadurch, daß bei einer Drehung des Füllgutbehälters 11 zwischen dem Pulverabweiskörper 23 und dem Wandabschnitt 18 Pulver 1 in den Zwischenraum 30 gelangt, wird die dem Pulverabweiskörper 23 nachfolgende erste Gruppe 2 von Bohrungen 13 stets ausreichend mit Pulver 1 versorgt bzw. überdeckt. Dieses Pulver 1 stammt zumindest teilweise aus dem Zwischenraum 30, und kann mittels des Pulverleitblechs 31 zusätzlich einzelnen Bohrungen 13 der Gruppe 2 gezielt zugeleitet werden.

Die so geformten Pulverpreßlinge werden, nachdem die Bohrungen 13 unter den Pulverabweiskörper 23 geschwenkt sind, mittels der Überschiebestempel 22 in die bereitgestellten Kapselunterteile 6 im Segment 35 überschoben. Anschließend wird das Segment 35 aus dem Bereich der Vorrichtung 10 geschwenkt, so daß ein anderes Segment 35 mit leeren Kapselunterteilen 6 unter die Überschiebestempel 22 geschwenkt werden kann.

Ergänzend wird erwähnt, daß die Vorrichtung 10 bzw. der Füllgutbehälter 11 in verschiedener Art und Weise abgewandelt werden kann. So ist es insbesondere denkbar und auch üblich, anstatt dreier Gruppen 2, 3, 4 von Bohrungen 13 eine größere Anzahl von Gruppen mit Bohrungen 13, und somit auch eine größere Anzahl von Stopfstempelstationen vorzusehen. Auch in diesem Fall wird durch die besondere Ausgestaltung des Füllgutbehälters 11 die dem Pulverabweiskörper 23 nachfolgende erste Gruppe von Bohrungen 13 besser mit Pulver 1 versorgt, so daß sich die Dosiergenauigkeit erhöht. Ferner wird daruf hingewiesen, daß sich die Höhe der Wandabschnitte 17, 18 des Mantels 15 aufgrund der mit dem Füllgutbehälter 11 zusammenwirkenden Einrichtungen ergibt. Je tiefer jedoch der Bodenabschnitt 19 im Vergleich zum Boden 12 angeordnet werden kann, desto besser ist auch die Versorgung der dem Pulverabweiskörper 23 nachfolgenden ersten Gruppe von Bohrungen 13 mit Pulver 1.

## Patentansprüche

1. Vorrichtung (10) zum Dosieren und Abgeben von Pulver (1) in Hartgelatinekapseln oder dergleichen, mit einem taktweise drehbaren Füllgutbehälter (11) für das Pulver (1), in dessen Boden (12) Gruppen (2 bis 5) mit Bohrungen (13) für das Pulver (1) ausgebildet sind, mit in die Bohrungen (13) einund ausfahrbaren Stopfstempeln (21) zum Bilden von Pulverpreßlingen, und mit von einem Abweiselement (23) für das Pulver (1) umgebenen Übergabestempeln (22) zum Überschieben der Pulverpreßlinge in bereitgestellte Kapselunterteile (6), **dadurch gekennzeichnet, daß** zwischen einer umlaufenden Wand (15) des Füllgutbehälters (11) und dem Abweiselement (23) ein Zwischenraum (30) für das Pulver (1) ausgebildet ist, so daß das im Zwischenraum (30) befindliche Pulver (1) dem Bereich der dem Abweiselement (23) in Förderrichtung des Pulvers (1) nachfolgenden ersten Gruppe (2) von Bohrungen (13) zuführbar ist.

2. Vorrichtung nach Anspruch 1, **dadurch gekennzeichnet, daß** die umlaufende Wand (15) aus zwei vertikal angeordneten Wandabschnitten (17, 18) besteht, die mittels eines ringförmig ausgebildeten Zwischenbodens (19) miteinander verbunden sind, so daß der Zwischenboden (19) gegenüber dem Boden (12) erhöht angeordnet ist, und daß der Zwischenraum (30) oberhalb des Zwischenbodens (19) ausgebildet ist.

3. Vorrichtung nach Anspruch 1 oder 2, **dadurch gekennzeichnet, daß** der ersten Gruppe (2) von Bohrungen (13) ein Leitelement (31) für das Pulver (1) zugeordnet ist.

4. Vorrichtung nach Anspruch 2 oder 3, **dadurch gekennzeichnet, daß** das Abweiselement (23) kreisabschnittsförmig ausgebildet ist und eine der umlaufenden Wand (15) des Füllgutbehälters (11) zugewandte Seite (24) aufweist, die in Höhe des ersten Wandabschnitts (17) der Wand (15) nahezu spaltlos zum ersten Wandabschnitt (17), und in Höhe des zweiten Wandabschnitts (18) der Wand (15), den Zwischenraum (30) bildend, beabstandet zum zweiten Wandabschnitt (18) verläuft.

## Claims

1. Device (10) for metering and dispensing powder (1) into hard gelatin capsules or the like, having a filling-material container (11) for the powder (1), which can rotate cyclically and in the base (12) of which groups (2 to 5) of bores (13) for the powder (1) are formed, having compacting rams (21), which can be moved into and out of the bores (13) in order to form powder compacts, and having transfer rams (22), which are surrounded by a deflector element (23) for the powder (1), for pushing the powder compacts into provided capsule lower parts (6), **characterized in that** a space (30) for the powder (1) is formed between a peripheral wall (15) of the filling-material container (11) and the deflector element (23), so that the powder (1) located in the space (30) can be fed to that region of the first group (2) of bores (13) which follows the deflector element (23), as seen in the direction in which the powder (1) is conveyed.

2. Device according to Claim 1, **characterized in that** the peripheral wall (15) comprises two vertically arranged wall sections (17, 18), which are connected to one another by means of an intermediate base (19), which is of annular design, so that the intermediate base (19) is arranged at a higher level than the base (12), and **in that** the space (30) is formed above the intermediate base (19).

3. Device according to Claim 1 or 2, **characterized in that** the first group (2) of bores (13) is assigned a guide element (31) for the powder (1).

4. Device according to Claim 2 or 3, **characterized in that** the deflector element (23) is designed in the form of a segment of a circle and has a side (24) which faces the peripheral wall (15) of the filling-material container (11) and runs at a distance from the second wall section (18), in such a manner that at the height of the first wall section (17) of the wall (15) there is virtually no gap between it and the first wall section (17), and at the height of the second wall section (18) of the wall (15) the space (30) is formed.

## Revendications

1. Dispositif (10) pour doser et distribuer de la poudre (1) dans des capsules de gélatine dure ou produits analogues comprenant :
- un réservoir (11) pour la poudre (1), tournant pas à pas, et dont le fond (12) comporte des groupes (2-5) de perçages (13) pour la poudre (1),
- des poinçons de bourrage (21) qui peuvent pénétrer et se dégager des perçages (13) pour former des comprimés de poudre et des poinçons de transfert (22) pour transférer des ébauches de poudre dans des parties inférieures de capsules (6) déjà fournies, ces poinçons étant entourés par un écarteur (23) pour la poudre (1),
**caractérisé en ce qu'**
entre une paroi périphérique (15) du réservoir (11) de produits de remplissage et l'élément d'écartement (23), on a un intervalle (30) pour la poudre (1) de façon que la poudre (1) contenue dans l'intervalle (30) soit fournie à la zone des perçages (13) du premier groupe (2) faisant suite à l'élément d'écartement (23) dans le sens du transfert de la poudre (1).

2. Dispositif selon la revendication 1,
**caractérisé en ce que**
la paroi périphérique (15) se compose de deux segments de paroi (17, 18) verticaux, reliés par un fond intermédiaire (19) de forme annulaire de façon que le fond intermédiaire (19) soit relevé par rapport au fond (12) et que l'intervalle (30) soit réalisé au-dessus du fond intermédiaire (19).

3. Dispositif selon la revendication 1 ou 2,
**caractérisé en ce que**
le premier groupe de perçages (13) comporte un élément de guidage (31) pour la poudre (1).

4. Dispositif selon la revendication 2 ou 3,
**caractérisé en ce que**
l'écarteur (23) est en forme de segment de cercle et comporte un côté (24) tourné vers la paroi périphérique (15) du réservoir (11), ce côté passant à hauteur du premier segment (17) de la paroi (15), pratiquement sans laisser d'intervalle dans le premier segment de paroi (17) et à hauteur du second segment de paroi (18), la paroi (15) qui forme l'intervalle (30) est écartée par rapport au second segment de paroi (18).
